# EUROPEAN PATENT APPLICATION

(11) **EP 1 652 770 A1**
(43) Date of publication of application: **03.05.2006**
(21) Application number: 03817223.5
(22) Date of filing: 25.06.2003
(51) Int. Cl.: B64D 1/08

(54) **DEVICE FOR CARGO DISPOSITION IN AN AIRCRAFT AND FOR JETTISON SAID CARGO THEREFROM**

(71) Applicant: Smetannikov, Valery Ilyich, Moscow, 115573 (RU)
(72) Inventor: Smetannikov, Valery Ilyich, Moscow, 115573 (RU)
(74) Representative: Andrae, Steffen
(86) International application number: PCT/RU2003/000273
(87) International publication number: WO 2004/113167

(57) **Abstract**

The invention relates to airborne equipment, namely to means for cargo stowage in an airborne vehicle and for jettisoning thereof. Most effectively the device may be used for non-parachute jettisoning the bulk cargo at small height from the board of the transport planes, e.g. I1-76. The task of the present design is to make a device where the following would be provided: the simplification of design of means for stowing the cargoes onboard an airborne vehicle and their jettisoning from the airborne vehicle, improving the reliability and convenience of these means thus improving the economic efficiency of non-parachute cargo jettisoning. This task in the offered device is solved by making the device for cargo stowage onboard an airborne vehicle and their jettisoning from the airborne vehicle, that according to the present invention is equipped with means for expanding the volume of the storage tank, where the means for fixing the pallets before reaching the jettisoning position is made as a single flexible tension bar placed along the longitudinal axis of the airborne vehicle having both ends connected to the airborne vehicle where one end of the tension bar is connected to the airborne vehicle at the front part of the cargo compartment while the other end is connected to the airborne vehicle after the bend of the tension bar before the jettisoning position in the rear part of the cargo compartment where the tension bar is equipped with free-moving rings used for fixing the pallets.

## Description

### Scope

The device relates to the equipment of the aircrafts, particularly to the means of cargo stowage onboard the aircraft and jettisoning these cargoes from the aircraft.

Most effectively the device may be used for non-parachute jettisoning the bulk cargo at small height from the board of the transport planes, e.g. I1-76.

### Prior art

There are known different devices and facilities for jettisoning the cargoes from an airborne vehicle. There is a known lifting device in the shape of longitudinal beams at the ceiling of the cargo compartment of the plane, which serves for moving the cargo packages from the storage bunker to the jettisoning position above the cargo ramp (US Patent 3371891, Cl. B64D 1/08, 1968).

The device provides the successive separation of the cargoes fixed using the ropes not requiring discharging chutes and traditional roller guides.

There is a known device for stowing and jettisoning the piece cargoes (mines or shells) onboard an airborne vehicle, equipped with the means for pushing-out the cargo from the pallets, where these cargoes are stored in the trays, and the means for separating the cargoes from the trays when landing; the means for connecting the pallets with each other and with the plane (US Patent 4161301, Cl. B64D 1/08, 1979).

There is a known device for storing and jettisoning the cargoes from the airborne vehicle or from board of any other transport vehicle, where the cargoes are packed at a modular construction, assembled of the trays (pallets) that have the detachable devices for fixing to the transport vehicle (WO N° 8805398; Cl. B64D 1/08, 1988).

In the known invention cargoes are fixed (using tie rods) to the trays on the pallets with the opportunity of moving the cargoes under the influence of the gravity force, after separating the trays from the ties with the pallets, to the jettisoning position, where these cargoes in their own turn are separated by special devices from the ties with the trays and are pushed out from e.g. a plane.

The above mentioned devices are suited for jettisoning of individual and rather large cargoes but they are not suited for bulk and small cargoes in bag or similar package.

There is a known package for strapdown landing of the bulk and small cargoes, such as food, medicines, building materials, etc (Patent RU 2014248; Cl. B64D 1/08 1994).

For goods (the package) preservation when landing the same are provided with outer shell (in the shape of truncated pyramid), special shell for cushioning, cargo shell and special ties (strength cords and tape).

The drawback of the known design is its complexity and high price (it is advisable for use when landing small lots of cargo).

It should also be mentioned that a range of known devices of non-parachute jettisoning allows irretrievable loss of pallets and the like means thus decreasing the efficiency of such a method of jettisoning in case of large number of flights.

The device most close to the offered one is the device for stowing cargoes onboard the aircraft and their jettisoning from it including the pallets for stowing the cargoes that are placed on roller guides in the cargo compartment along the longitudinal axis of the aircraft, the means for fixing of the cargo packages on the pallets, the devices for fixing the pallets against the longitudinal displacement providing for moving the pallets with cargoes to the jettisoning position after opening these fixation devices and the tank for storing the pallets after jettisoning the cargoes (Patent RU N° 2093424, Cl. B64D 1/08, 1997).

In the known design the cargo jettisoning is due to the powers that occur at the aircraft nosing-up (with the angle ranging from 10° to 12°).

In this known device each of the means for fixing the packing of the cargoes to the pallets is made in the shape of the net formed by circular and radial flexible tension bars, where one end of each of the radial tension bars is connected to the circular flexible tension bar, while the other end has a loop shape, connected using a pin to the other loop fixed at the pallet; here the guide is installed above the pallets, connected by means of the flexible halyard to all the pins for extracting them from the loops before reaching the jettisoning position.

The known device allows using the pallets and the net for the cargo fixation repeatedly thus reducing the cost of the cargo jettisoning.

However, this device for stowing and jettisoning the cargoes has the following drawbacks:
- design complexity of the abovementioned means of fixation of the cargoes packing at the pallets;
- after the separation of the net of cargo fixation at the pallet at the moment of jettisoning the fall of separate bags with the cargoes of the package near the pallet tank may hinder the cargoes from pushing-out the other pallets;
- complexity of fixing the pallets before reaching the jettisoning position: the presence of four flexible tension bars at each side of the cargo compartment that should be reconnected from the discharged pallets after pushing-out the cargo to the pallets, from which the cargoes should be pushed-out during the following approach of the aircraft. This operation complicates the work of the crew and demands special attention and considerable time thus extending the flight time and correspondingly the cost of cargo delivery;
- limited capacity of storage tanks designed for 4 pallets at each side of the cargo compartment thus reducing the maximum amount of the pushed-out cargo per each approach of the aircraft and doesn't allow reducing the required number of flights for jettisoning and the gross flight time.

### Disclosure of the invention

The task of the present design is to make a device where the following would be provided: the simplification of design of means for stowing the cargoes onboard an airborne vehicle and their jettisoning from the airborne vehicle, improving the reliability and convenience of these means thus improving the economic efficiency of non-parachute cargo jettisoning.

This task in the offered device is solved by making the device for cargo stowage onboard the aircraft and their jettisoning from the aircraft that has the pallets for packing the cargoes installed on roller guides along the side guides of the cargo compartment having the opportunity of movement under the horizontal component of gravity and/or inertial force along the longitudinal axis of the airborne vehicle, the means for fixation of the packages of cargoes at the pallets, the devices for fixing the pallets against the longitudinal displacement providing for moving the pallets with cargoes to the jettisoning position after opening these fixation devices and the means for fixing the pallets before reaching the jettisoning position and the tank for storing the pallets after jettisoning the cargoes that according to the invention are equipped with means for expanding the volume of the storage tank, where the means for fixing the pallets before reaching the jettisoning position is made as a single flexible tension bar placed along the longitudinal axis of the airborne vehicle having both ends connected to the airborne vehicle where one end of the tension bar is connected to the airborne vehicle at the front part of the cargo compartment while the other end is connected to the airborne vehicle after the bend of the tension bar before the jettisoning position in the rear part of the cargo compartment where the tension bar is equipped with free-moving rings used for fixing the pallets.

The invention is characterized by the fact that the means for expanding the tank volume is made as angle-plates mounted on the ramp over the roller guides.

The invention is characterized by the fact that the number of moving rings equals to the number of pallets placed along the longitudinal axis of the airborne vehicle.

Mentioning the "inertial force" for moving cargo to the jettisoning position provides the possibility of relevant aircraft maneuvers (especially the acceleration using engine boost at nose-up) during the cargo dropping.

The suggested means for pallets fixation before achieving the jettisoning position instead of four flexible tension bars as used in the prototype device allows connecting all the pallets to one braking tension bar even at the stage of their placement in the airborne vehicle before loading the pallets.

The invention is characterized by the fact that each of the above means for fixation of the packages of cargoes at the pallets contains at least a pair of tie rods that belt the package in the vertical and the like planes being connected with each other above the packing and spaced from each other below the packing, where these tie rods are made as two closed flexible couplers placed in the planes parallel to the longitudinal axis of the airborne vehicle.

The protruding elements are made at the pallet bottoms for preventing the packing from lateral displacement.

In the abovementioned group of attributes the term "stowage" means a pack, roll, bale, stack, etc. - depending on the type of cargo packed on the pallet.

According to the invention, the means for stowage fixation on the pallets - in the form of two or more ties (stripes or tension bars binding the stowage) - are not connected to the pallets and other elements of airborne vehicle design (at least, to the moment of jettisoning) and they are spaced between each other below the stowage.

Such a simplified (as compared to the net design of the prototype) design of present means is possible because the frictional force of cargo stowage with the surface of pallet is approximately twice as high as the force influencing on cargo at aircraft nose-up (10° to 12°) at the time of cargo jettisoning, thus providing a stable position of stowage on the pallet in longitudinal direction to the moment of pallet braking before reaching the jettisoning position. The protruding elements (longitudinal stiffening plates) of the pallets provide for stable position of stowage in cross direction.

For preventing the stowage from displacement against the pallet in other phases of flight conventional aircraft chains for cargo fixation in compartment are additionally used, they are being taken away just before jettisoning the cargo.

The proposed means for stowage fixation also provides for safe separation into separate cargo units (preferably sacks with cargo) thus guaranteeing their preservation when landing after dropping the cargoes.

The proposed invention is explained by the following description of its design and figures.
- Fig. 1 -: cargo pallet of the proposed device (top view);
- Fig. 2 -: the same (bottom view);
- Fig. 3 -: device for cargo fixation on the pallet (front view);
- Fig. 4 -: the same (top view);
- Fig. 5 -: means for pallet fixation in the jettisoning position;
- Fig. 6 -: loading pattern of an aircraft with cargo pallets;
- Fig. 7 -: view A-A from Figure 6;
- Fig. 8 -: low-ground equipment of cargo compartment of the aircraft (plane view);
- Fig. 9 -: low-ground equipment of cargo ramp with the pallets in the tank (plane view);
- Fig. 10 -: view B-B from Fig. 8;
- Fig. 11 -: example of the means for pallet fixation against longitudinal displacement;
- Fig. 12 -: view C-C from Fig. 11.

### The best embodiment

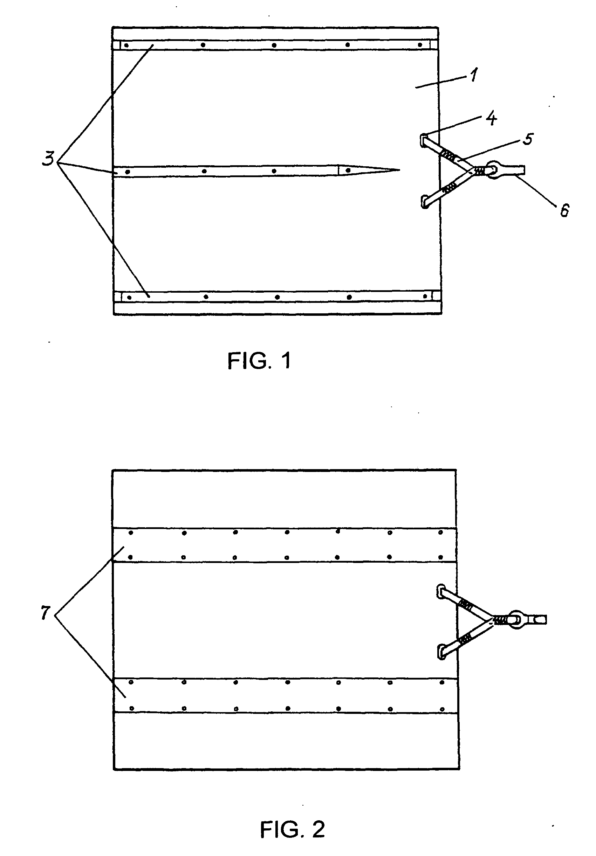

The device for cargo stowage and jettisoning has the pallets 1 (Fig. 1-5) for packing the cargoes 2. Each pallet 1 is made preferably out of plywood of 18 mm thickness and has on its upper side protruding elements, for example, three longitudinal stiffening plates 3, made out of plywood of the same thickness. On one cross side of pallet 1 there are two holes 4 where the ends of flexible tension bar 5 are fixed, which at another end has a latch hook 6. On the lower side of pallet 1 two metal strips 7 are fixed.

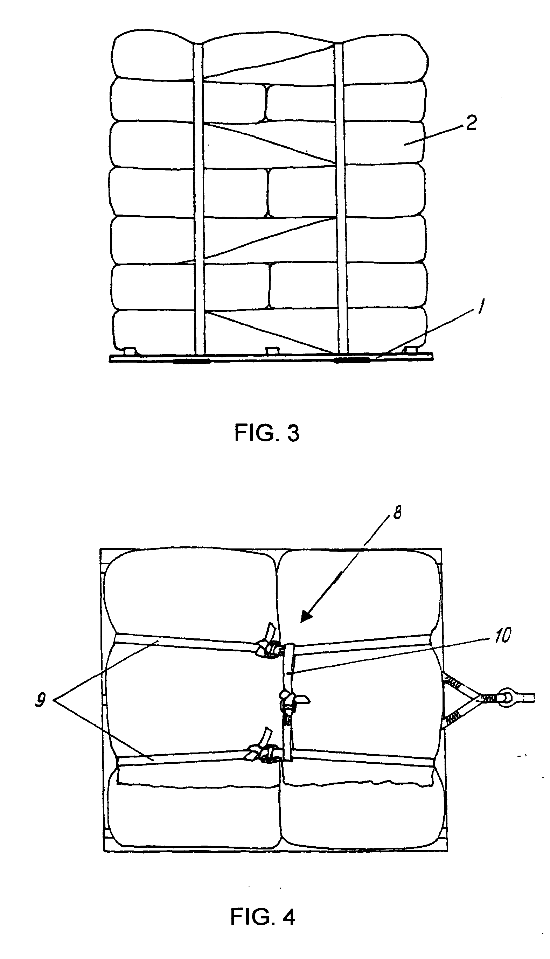

The device includes (Fig. 4) means 8 for stowage fixation on pallets. Each means 8 contains at least a pair of ties 9 (locked flexible connections: tension bars, stripes, wires and so on), binding the stowage in vertical and near to them planes (at the moment of aircraft loading) and connected with each other above stowage, for example, by one cross flexible connection 10. The ties are preferably placed in the planes parallel or near to parallel longitudinal axis of the aircraft.

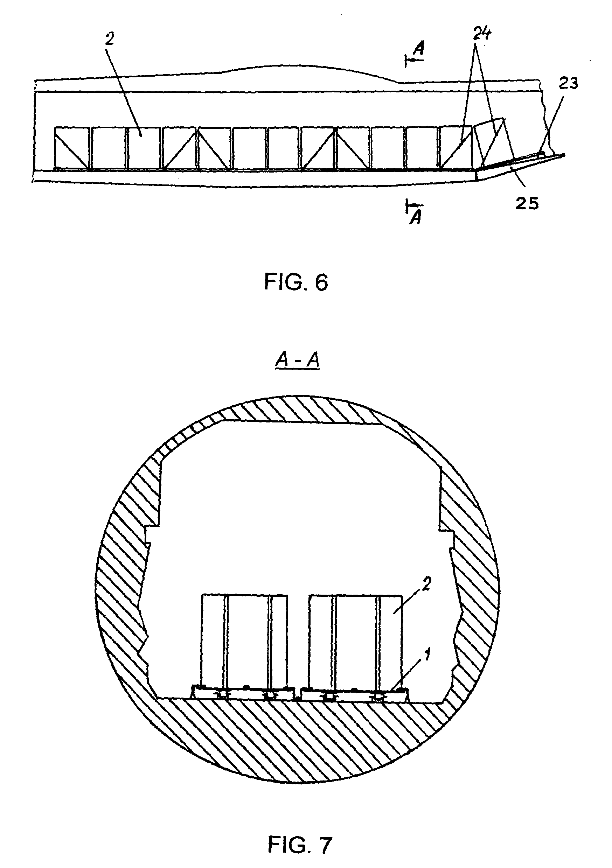

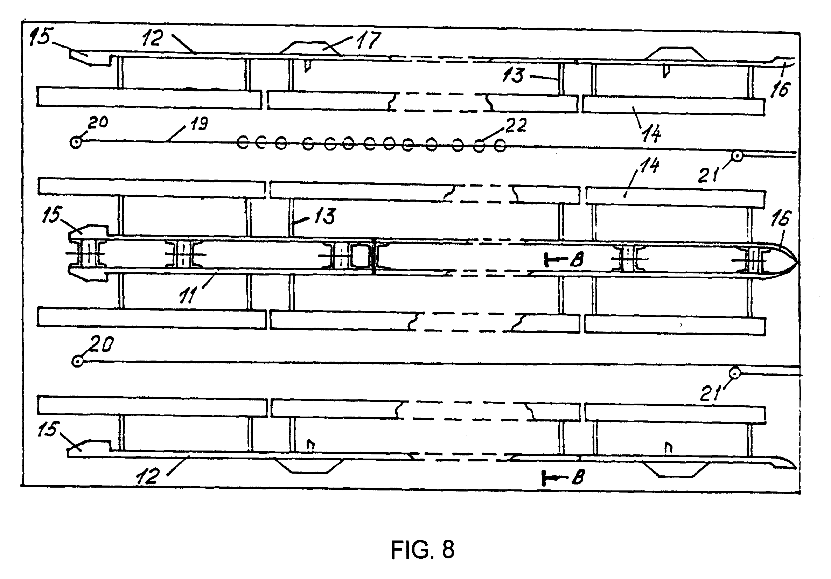

The device contains means for pallets fixation against longitudinal displacement, allowing when opening them the possibility of moving the pallets with cargo to the jettisoning position. In Fig. 7-10 appropriate low-ground equipment is shown which is designed for placing the pallets 1 with cargo 2 into cargo compartment of the aircraft and ensuring their ordered motion along the compartment when loading and jettisoning. The equipment is easy-off and contains (Fig.8) central 11 and side 12 guide rails on which roller guides 14 are assembled using plungers 13 for pallets' rolling.

Upper racks and vertical plates of both parallel rails 11 and 12 serve as guides for pallets 1 at their movement along the cargo compartment when loading and jettisoning the cargo, while during flight they prevent the pallets with cargo from side and vertical displacement.

In the front along-flight direction part the guide rails 11,12 two stops 15 are fixed for movement limitation of the first loaded pallets 1 in the direction of crew compartment. At the ends of guide rails near the front part cargo compartment and at the ramp catchers 16 (Fig. 8-9) are installed providing safe getting of pallets 1 into guide rails 11 and 12 when moving the pallets from cargo compartment to the ramp and vice-versa.

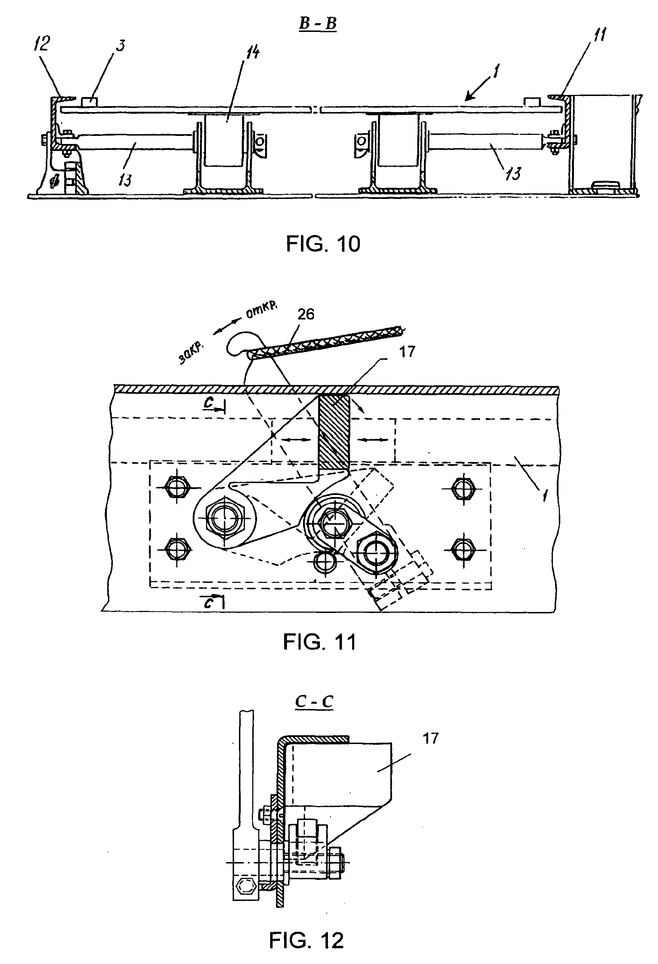

The device contains detachable means 17 placed on the side guide rails 12 designed for pallets fixation against longitudinal displacement in the guide rails 11, 12. Locks of pallets fastening, e.g. shown in Fig. 11, may be used as means 17. Locks may be opened using halyards 26.

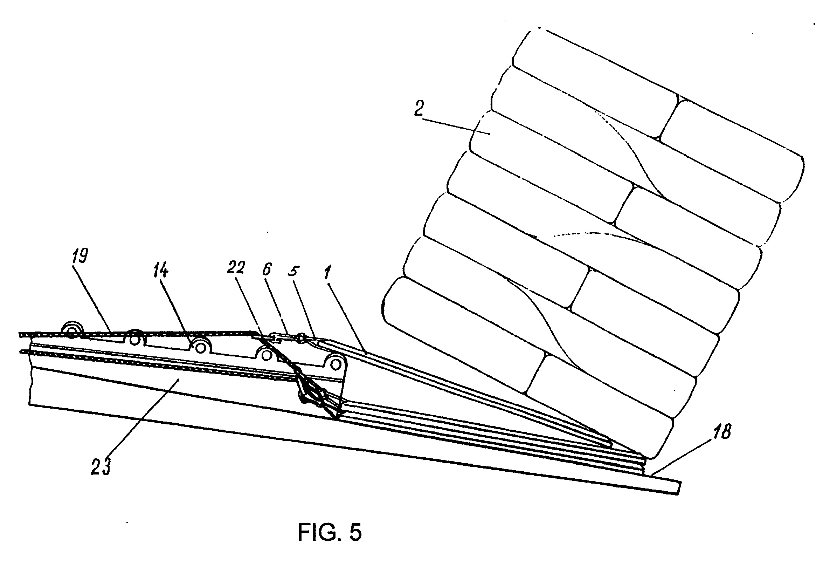

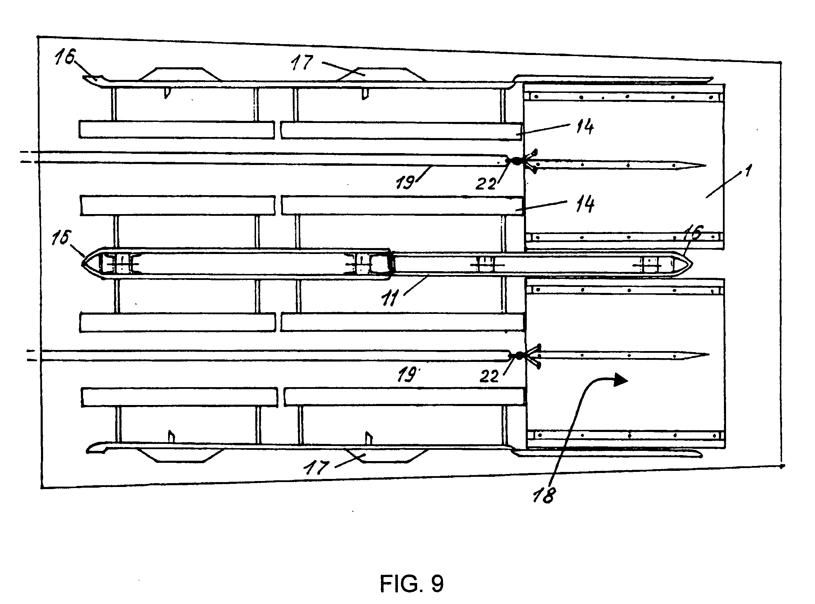

The device also contains a tool for the fixation of pallets 1 before achieving the jettisoning position, providing arrival of pallets 1 in tanks 18 (fig. 5,9), placed behind roller guides 14 at the edge of ramp.

This tool (Fig. 8-9) is made in the form of elastic flexible tension bar 19 having one end attached to tie-down assembly unit 20 on the floor of the aircraft, while the other end of tension bar 19, extended to the tank 18 and after the bend backwards, is attached to the tie-down assembly unit 21. The point of flexible tension bar bend 19 is located in front of tank 18 at a distance which provides braking of pallet 1 in tank 18 and, after its release, pressing to the flank of roller guide 14.

On each flexible tension bar 19 of right and left boards thirteen rings 22 are placed for attaching pallets 1 using latch hooks 6.

The tool for fixation of pallets 1 in tank 18 contains angle-plate 23 (Fig.5) which is fastened under the roller guide 14. The angle-plate raises the height of tank threshold 18 and accordingly its capacity, it is used as a stop at back movement of pallet 1 after discharging it from the package of cargo 2 due to tension of flexible tension bar 19.

The device also contains conventional chains 24 for additional fastening of pallets with cargo to the floor of the aircraft before the jettisoning approach operation and an inclinable cargo ramp 25 (Fig.6).

The proposed device operates as follows.

Before loading the aircraft all pallets 1 are placed in it. For this purpose each pallet 1 is installed at the ramp 25 on the roller guide 14 between guide rails 11, 12 directly at front of the tank 18, and then it is manually pushed to the cargo compartment of the aircraft up to the stop with further fixation using one of the means 17. In that way 12 the pallets are placed in the aircraft along each board of the cargo compartment and one pallet at the ramp.

Each pallet 1 located in the aircraft is loaded with cargo in sacks (or racks) of 1250-1500 kg, after putting two tension bars 9 on the pallet along the roller guide 14, with the ends of tension bars 9 symmetrically distributed relatively to the centre of pallets 1. After the sacks are set on pallet 1 their roll is tied up with lateral tension bars 9 which are bundled up. Then the tension bars 9 are connected with each other over the roll with the short tie 10, thus providing rigidity of cargo roll 2 in cross direction.

After loading all the pallets 1 with cargo 2 the flight navigator determines the number of pallets to be discharged during out each aircraft jettisoning approach on the basis of tank 18 capacity and the extent of cargo acceptance zone 2 in the jettisoning area. Each group of pallets 1 with cargo 2 in one aircraft jettisoning approach is fastened to the floor of the aircraft using conventional chains 24.

A halyard 26 (Fig.11) for manual opening by an operator of the lock during the cargo jettisoning is affixed to the means 17 of the first, in order of dropping, pallet. The means 17 of the following pallets to be discharged during the same approach are affixed with halyards (not shown in the figures), each to the next pallet at the exit of the cargo compartment. Then the hatch of the aircraft cargo compartment is closed.

When flying on the tangent to the jettisoning zone under a command of a flight navigator the ramp is opened and takes away the chain 24 for pallets 1 fastening with cargo 2 from the first series on the ramp side.

When approaching the jettisoning area in the reference point the aircraft commander by request of the flight navigator puts the aircraft from forward flight in nose-up condition with an angle of 10° to 12°. Under a command of the flight navigator operators of left and right boards open the means 17 using halyards 26 of the first pallets 1 in line, and they start moving under the influence of gravity force component (and, possibly, of inertia).

Opening of the means 17 of next pallets 1 is done after tensioning of halyards linking the means 17 of these pallets 1 with the first pallets 1 at the beginning of movement of the latter.

At the moment of derailing of pallet 1 with cargo roll 2 out of the last rolling element of the roller guide 14 a tensioning of flexible tension bar 19 takes place thus braking the pallet 1 which "falls down" in tank 18, and the cargo roll 2 is dropped out of the aircraft. The free pallet 1 under the influence of tension force of flexible tension bar 19 is moving in backward direction, thrusts against the flank of angle-plate 23 (Fig.5) of roller guide 14 and remains in tank 18.

Dropping of stowage 2 of the following pallets 1 is likewise. Accumulation of pallets 1 takes place in tank 18.

For compensating the inclination of the plates 23 under roller guide 14 on ramp 25 (Fig.5), this ramp, when opening before landing, goes down under a necessary angle.

The stowage dropped from the pallet 1 falls to pieces (separate cargoes 2) (e.g., sacks), as the ties 9 being not tied with each other from below, move apart and don't hold the cargo in stowage any more. This is also due to the ram air. The separate cargos 2, as compared to their compact roll or pack, are "pancaking" more efficiently and experience less buffing loads when landing (otherwise in stowage the upper sacks would create additional load on the lower sacks).

After dropping the first lot of cargo 2 off the pallets 1 the operator closes the hatch of the cargo compartment, the pallets 1 are taken away from the tank 18 and being vertically fastened to the boards of the aircraft.

The next lot of pallets 1 with cargo is released from additional chains 24, rolled over to the ramp, fixed with means 17 and attached with opening halyard as it was done with the previous lot of cargo.

Cargo 2 dropping off the next pallets is the same as the cargo 2 dropping off the first lot.

Thus the proposed device is characterized by simple design, significant reduction of time for cargo fastening to the pallet and, as the result, reducing the time of airborne vehicle loading. The necessity of reconnecting the tension bar to the pallets in flight after each aircraft approach for cargo jettisoning is excluded, the crew performance reliability is simplified and improved, and block hours are reduced.

The proposed device allows to expand the capacity of the pallet tank and, as consequence, the required maximal number of cargo dropping per one approach of the airborne vehicle, as well as the possibility to increase the thickness and resistance of pallets. This extends the pallet lifetime and the possibility of more shipments is increased, thus reducing the cargo delivery cost.

The test results show that the invention may be effectively realized on such aircraft as the 11-76 transport airplane jettisoning cargo at the height of 200 to 250 m at flight speed of 280 to 300 km/h. It may be used for delivering different free-running cargoes (grain, grit and other) in triple sacks or other cargo in package providing its safety.

## Claims

1. Device for cargo placement on aircraft and its jettison off it, containing pallets for stowage, installed in cargo compartment along lateral line of the aircraft, means of providing of stowage fixation, facilities for pallets fixation from lateral movement, giving when opening them possibility of movement of pallets with cargo to the jettison position, and also mean for pallets fixation before jettison position, distinguished by the fact that each of its indicated means of providing of stowage fixation on the pallets contains at least a pair of buckles, binding stowage in vertical and near to them plains and connecting with each other over the stowage.

2. The device by cl. 1, distinguished by the fact that separate loads in stowage are placed in sacks.

3. The device by cl. 1 or 2, distinguished by the fact that buckles are made in the form of two locked flexible connections, located in the plains parallel or near to parallel lateral line of the aircraft and connected with each other by one cross flexible connection over stowage.

4. The device by any of cl. 1-3, distinguished by the fact that on the pallets there are protruding elements for prevention of shifting and creeping of stowage in their lower part.

5. The device by any of cl. 1-4, distinguished by the fact that the pallets are installed between side guide tracks on roller strips by which they can move under the influence of horizontal gravity force or/and inertial force component.

6. The device by any of cl. 1-5, distinguished by the fact that indicated facilities for pallets fixation from lateral movement are made as detachable.

7. The device by any of cl. 1-6, distinguished by the fact that mean for pallets fixation before jettison position is made in the form of one flexible draft located across lateral line of the aircraft, both ends of which are connected with the aircraft, at that, point of connection of one end of this draft is located in front part of cargo compartment, and of another, after draft fluting before jettison position in the back part of cargo compartment, where for connection with the pallets on this draft freely shiftable rings are located by number of pallets placed along lateral line of the aircraft.

8. The device by cl. 7, distinguished by the fact that the indicated mean for pallets fixation before jettison position contains angle-plates for roller strip which is placed on ramp, where the height of the indicated side guide tracks is chosen taking into consideration plate data, and the height of the plates is compensated by ramp inclination.
